# EUROPÄISCHE PATENTANMELDUNG

(11) **EP 1 508 777 A1**
(43) Veröffentlichungstag der Anmeldung: **23.02.2005**
(21) Anmeldenummer: 04019253.6
(22) Anmeldetag: 13.08.2004
(51) Int. Cl.: G01C 21/32

(54) **Verfahren zur Aktualisierung einer digitalen Karte**

(30) Priorität: 16.08.2003 DE 10337622
(71) Anmelder: DaimlerChrysler AG, 70567 Stuttgart (DE)
(72) Erfinder: Aleksic, Mario, 78647 Trossingen (DE); Bracht, Alexander, 73730 Esslingen (DE)

(57) **Zusammenfassung**

Die Erfindung betrifft die Aktualisierung einer digitalen Karte, umfassend Elemente eines Verkehrswegenetzes, in einer nutzerseitigen Vorrichtung, auf der wenigstens eine Nutzanwendung der digitalen Karte abläuft, unter Verwendung einer in einer Zentrale angeordneten zweiten digitalen Karte.

Erfindungsgemäß wird lediglich eine für eine aktuelle Nutzanwendung benötigte Teilmenge von Elementen der digitalen Karte aktualisiert. Durch die - bspw. kontinuierliche - zentralenseitige Aussendung der dafür benötigten Daten erfolgt die Aktualisierung zeitnah zu dem Zeitpunkt, zu dem die entsprechenden Elemente der digitalen Karte von einer aktuellen Nutzanwendung benötigt werden, womit erfindungsgemäß der aktuellen Nutzanwendung stets der aktuellste Stand der digitalen Karte bereitgestellt wird. Indem wenigstens eine Element-Teilmenge der digitalen Karte - bspw. die für eine aktuelle Nutzanwendung benötigte - vorgebbar ist, wird erfindungsgemäß stets nur eine minimal benötigte Datenmenge, d.h. ein minimaler Aufwand an Datenübertragung, realisiert. Indem wenigstens eine zusätzliche Element-Teilmenge der digitalen Karte automatisch derart selektiert wird, dass die digitale Karte nach dem Empfang und der Verfügbarmachung der Daten der zusätzlichen Element-Teilmengen in sich Konsistenz und damit auch bezüglich der oder jeder auf dem nutzerseitigen Endgerät ablaufenden Nutzanwendung aufweist, wird erfindungsgemäß stets eine aktuelle digitale Karte bereitgestellt, welche ein problemloses Funktionieren der oder jeder auf dem Endgerät für den Nutzer ablaufenden Nutzanwendungen sicherstellt.

## Beschreibung

Die Erfindung betrifft die Aktualisierung von Elementen einer digitalen Karte eines Verkehrswegenetzes in einem nutzerseitigen Endgerät, z.B. einem Fahrzeugnavigationsgerät. Derartige Aktualisierungen sind unter Verwendung einer zentral angeordneten, zweiten digitalen Karte, die z.B. vom Hersteller der digitalen Karte stets auf dem neuesten Stand gebracht wird, vornehmbar. Durch die Aktualisierung werden Elemente der zweiten digitalen Karte, die von der digitalen Karte des nutzerseitigen Endgerätes in der vorliegenden Form nicht umfasst sind, da die Elemente z.B. neu zur zweiten digitalen Karte hinzugekommen sind oder zwischenzeitlich in der zweiten digitalen Karte geändert oder gelöscht wurden , der digitalen Karte des nutzerseitigen Endgerätes verfügbar gemacht.

Eine digitale Karte (beispielsweise in Form einer CD-ROM, DVD-ROM oder einer in einem Schreib-/Lesespeicher abgelegten Datei) in einem bei einem Nutzer angeordneten Endgerät ermöglicht einer auf diesem Endgerät ablaufenden Nutzanwendung (beispielsweise einer Fahrzeug-Zielführung) den Zugriff auf die geo-basierte Information der digitalen Karte. Beispiele für solche Endgeräte sind eine tragbare Navigationseinheit, ein in einem Fahrzeug fest angeordnetes Navigationsgerät oder ein 'Geo-Daten-Sensor', d.h. ein fahrzeugseitiges Steuergerät, das Zugriff auf eine digitale Karte hat. Beim Einsatz solcher Endgeräte ergibt sich das Problem, dass in der digitalen Karte gespeicherte Daten, die Elemente eines Verkehrswegenetzes darstellen, 'veralten', beispielsweise wenn neue Straßen gebaut oder Umleitungen eingerichtet werden, oder wenn POI ('points of interest', interessierende Orte) ihre Position wechseln bzw. Öffnungszeiten sich ändern. Da moderne nutzerseitige Endgeräte digitale Karten aufweisen, die komplette Länder oder sogar Kontinente abdecken, ist für die Aktualisierung dieser digitalen Karten auf einen jeweils aktuellsten Stand entweder eine umfangreiche Datenübertragung in das nutzerseitige Endgerät oder ein Komplettaustausch der digitalen Karte (beispielsweise durch einen Austausch der verwendeten DVD-ROM) nötig. Gerade bei mobilen nutzerseitigen Endgeräten, die über eine Luftschnittstelle mit Daten versorgt werden, fallen dabei hohe Kosten an und / oder die Datenübertragung dauert lange Zeit.

Als gattungsbildender Stand der Technik sei auf die US 6317753 B1 verwiesen.

Es stellt sich damit das Problem, auf dem nutzerseitigen Endgerät mit minimalem Aufwand an Datenübertragung eine stets aktuelle digitale Karte bereitzustellen, welche ein problemloses Funktionieren der auf dem Endgerät für den Nutzer ablaufenden Nutzanwendungen sicherstellt.

Die Aufgabe wird gelöst durch die Merkmale des Patentanspruchs 1. Die Unteransprüche betreffen vorteilhafte Aus- und Weiterbildungen der Erfindung.

Erfindungsgemäß ist wenigstens eine Element-Teilmenge der digitalen Karte des nutzerseitigen Endgerätes zur Aktualisierung durch eine zentralenseitige Aussendung von Daten vorgebbar, wobei von der Zentrale zusätzlich zu einer zu aktualisierenden Element-Teilmenge eine zusätzliche Element-Teilmenge in der zweiten digitalen Karte automatisch derart selektiert wird, dass die digitale Karte nach der Aktualisierung in sich Konsistenz aufweist, wobei Daten zur Aktualisierung der oder jeder zu aktualisierenden Element-Teilmenge und Daten der oder jeder zusätzlichen Element-Teilmenge zentralenseitig ausgesendet werden und beim Empfang solcher Daten vom nutzerseitigen Endgerät geprüft wird, ob die empfangenen Daten eine vorgegebene Element-Teilmenge betreffen, in welchem Fall die empfangenen Daten der digitalen Karte verfügbar gemacht werden.

Anders ausgedrückt wird lediglich eine für eine aktuelle Nutzanwendung benötigte Teilmenge von Elementen der digitalen Karte aktualisiert. Durch die - bspw. kontinuierliche - zentralenseitige Aussendung der dafür benötigten Daten erfolgt die Aktualisierung zeitnah zu dem Zeitpunkt, zu dem die entsprechenden Elemente der digitalen Karte von einer aktuellen Nutzanwendung benötigt werden, womit erfindungsgemäß der aktuellen Nutzanwendung stets der aktuellste Stand der digitalen Karte bereitgestellt wird. Indem wenigstens eine Element-Teilmenge der digitalen Karte - bspw. die für eine aktuelle Nutzanwendung benötigte - vorgebbar ist, wird erfindungsgemäß stets nur eine minimal benötigte Datenmenge, d.h. ein minimaler Aufwand an Datenübertragung, realisiert. Indem wenigstens eine zusätzliche Element-Teilmenge der digitalen Karte automatisch derart selektiert wird, dass die digitale Karte nach dem Empfang und der Verfügbarmachung der Daten der zusätzlichen Element-Teilmengen in sich Konsistenz und damit auch bezüglich der oder jeder auf dem nutzerseitigen Endgerät ablaufenden Nutzanwendung aufweist, wird erfindungsgemäß stets eine aktuelle digitale Karte bereitgestellt, welche ein problemloses Funktionieren der oder jeder auf dem Endgerät für den Nutzer ablaufenden Nutzanwendungen sicherstellt. Anders gesagt wird durch eine entsprechende Ergänzung mit einer zusätzlichen Element-Teilmenge sichergestellt, dass die Aktualisierung der digitalen Karte bzgl. der aktuellen Anwendung auf dem nutzerseitigen Endgerät in sich konsistente Daten aufweist.

Besonders vorteilhaft ist die zentralenseitige Aussendung der Daten über einen Broadcast-Kanal, beispielsweise GSM cellbroadcast (sog. Nachrichtendienst), DAB-broadcast (Digital Audio Broadcasting) oder UMTS/G3-broadcast (Mobilfunkstandard der dritten Generation). Solche Broadcast-Kanäle sind üblicherweise mit einer für ein nutzerseitiges Endgerät zugreifbaren Empfangseinrichtung, wie bspw. Mobiltelefon und/ oder Radioempfänger, zu empfangen. Der Empfang der Daten ist dabei entweder kostenlos, bspw. während einer Einführungsphase, oder es ist eine Vergebührung, bspw. unter Verwendung von codierter Aussendung mit Entschlüsselung in der Empfangseinrichtung, möglich.

Vorzugsweise ist die wenigstens eine Element-Teilmenge der digitalen Karte vom Nutzer vorgebbar und/ oder änderbar. Hier sind verschiedene Möglichkeiten vorgesehen, bspw. Vorgaben und/ oder Änderungen durch Eingaben am nutzerseitigen Endgerät, durch einen Anruf des Nutzers bei der Zentrale und/ oder durch eine automatisierte Abbuchung von einem Nutzerkonto entsprechend einer aktuellen Ortsposition des nutzerseitigen Endgerätes.

Ganz besonders vorteilhaft ist die zentralenseitige Aussendung von Daten, die verschiedene Versionen einer zu aktualisierenden Element-Teilmenge der digitalen Karte betreffen. Beispielsweise werden zentralenseitig Daten zur Aktualisierung verschiedener Versionen der selben Element-Teilmenge ausgesendet. Damit sind besonders einfach verschiedene Versionen einer Element-Teilmenge der digitalen Karte in verschiedenen nutzerseitigen Endgeräten gleichzeitig aktualisierbar. Die Aussendung der verschiedenen Versionen erfolgt bspw. nacheinander. In einer vorteilhaften Weiterbildung ist vorgesehen, diese Aussendung zyklisch vorzunehmen. Das bedeutet, dass eine Version einer Element-Teilmenge der digitalen Karte bspw. jeweils für eine bestimmte Zeitdauer ausgesendet wird. Nach dem Ablauf dieser Zeitdauer erfolgt die Aussendung einer nächsten Version. Wenn Daten zur Aktualisierung aller verfügbaren Versionen einer Element-Teilmenge der digitalen Karte ausgesendet wurden, beginnt die Aussendung erneut. Alternativ oder zusätzlich ist die gleichzeitige Aussendung von Daten zur Aktualisierung mehrerer oder aller verfügbaren Versionen einer Element-Teilmenge der digitalen Karte vorgesehen.

Eine zu aktualisierende Element-Teilmenge umfasst vorzugsweise ein bestimmtes geographisches Gebiet, beispielsweise ein die aktuelle Ortsposition des nutzerseitigen Endgerätes umgebendes Gebiet, eine bestimmte Straßenklasse, beispielsweise Bundesautobahnen POI ('points of interest', d.h. nutzerinteressierende Orte wie beispielsweise Tankstellen oder Restaurants), und/ oder Klassen von POIs.

Die Konsistenz der oder jeder auf dem nutzerseitigen Endgerät ablaufenden Nutzanwendung wird besonders vorteilhaft dadurch sichergestellt, dass die zusätzliche Element-Teilmenge automatische derart selektiert wird, das nach der Verfügbarmachung der Daten zur Aktualisierung der wenigstens einen zusätzlichen Element-Teilmenge für die digitale Karte des nutzerseitigen Endgerätes keine Strecke existiert, an deren Ende Verkehrswegenetz-Benutzer zwangsläufig umkehren müssen (d.h. eine Sackgasse), wenn diese Strecke nicht auch von der zweiten digitalen Karte umfasst ist (d.h. ebenfalls als Sackgasse ausgebildet ist), und / oder keine zwei Strecken existieren, an deren Enden Verkehrswegenetz-Benutzer zwangsläufig umkehren müssen, wenn diese zwei Strecken in der zweiten digitalen Karte durch wenige Kanten verbunden sind (d.h. diese wenigen Kanten sind als Elemente von der zweiten digitalen Karte umfasst), und / oder keine Strecken existieren, an denen zerteilte Abbiegerestriktionen vorliegen, die in der zweiten digitalen Karte als Folge von Strecken umfasst sind (z.B. wenn Abbiegen von Kante A nach Kante B verboten ist, sind sowohl die Elemente "Kante A" als auch "Kante B" zu aktualisieren, da ansonsten im Fall dass später eine angrenzende Teilmenge aktualisiert wird, zwar das Element "Kante B" hinzugefügt würde nicht aber das Abbiegeverbot, da dieses von der bereits aktualisierten Teilmenge umfasst ist), und / oder für das Erreichen eines POI relevante Daten einer Strecke so aktuell sind wie die Daten des POI selbst (wird z.B. ein neuer POI als Element der digitalen Karte hinzugefügt, wird eine zum POI führende, neu angelegte Strecke für die Aktualisierung auch dann automatisch selektiert, wenn nur eine Aktualisierung von POI vorgesehen ist) und/ oder Element-Abhängigkeiten komplett übertragen werden (d.h. wenn eine Element-Transaktion von einer vorangegangenen Element-Transaktion abhängig ist).

Besonders einfach ist der Einsatz der Erfindung dann realisierbar, wenn eine zu aktualisierende Element-Teilmenge ein geographisches Gebiet umfasst und die Daten zentralenseitig über einen Broadcast-Kanal, der vorzugsweise in diesem geographisches Gebiet empfangbar ist, ausgesendet werden. Anders ausgedrückt werden geographische Gebiete einem jeweiligen Broadcast-Kanal, bspw. einem entsprechenden Sendemittel, zugeordnet. Beim "Betreten" dieses geographischen Gebietes durch das nutzerseitige Endgerät werden, wenn dieses Gebiet vom Nutzer vorgegeben wurde (d.h. wenn der Nutzer bspw. eine entsprechende Gebühr bezahlt hat) der digitalen Karte die über den Broadcast-Kanal empfangenen Daten verfügbar gemacht.

Mit Vorteil wird vorgeschlagen, dass Bereinigungen von Element-Ungenauigkeiten in der zweiten digitalen Karte (z.B. eine Änderung der Streckengeometrie einer bereits vorhandenen Strecke aufgrund einer erneuten, genaueren Messung) speziell gekennzeichnet werden, wobei zusammen mit der zusätzlichen Element-Teilmenge weitere Daten von der Zentrale an das nutzerseitige Endgerät über die zumindest zeitweise datentechnische Verbindung gesendet und der digitalen Karte verfügbar gemacht werden, welche zur Wiederherstellung einer logischen Verbindung zwischen durch eine Aktualisierung um Ungenauigkeiten bereinigten und nicht bereinigten Elementen verwendbar sind. Alternativ kann, wenn die Bereinigungen von Element-Ungenauigkeiten nicht speziell gekennzeichnet werden, im nutzerseitigen Endgerät durch einen Vergleich zwischen neuen und alten Eigenschaften eines Elements abgeleitet werden, ob eine Bereinigung von Ungenauigkeiten vorliegt, z.B. indem bei gleichbleibender Topologie (d.h. logische Verbindungen zu anderen Elementen) und nur geringfügig geänderter Geometrie auf Bereinigungen von Element-Ungenauigkeiten geschlossen wird. Gegebenenfalls kann dann im nutzerseitigen Endgerät eine logische Verbindung zu entsprechenden nicht bereinigten Elementen hergestellt werden.

Vorzugsweise umfassen die Daten zur Aktualisierung der zu aktualisierenden Element-Teilmenge auch solche Elemente der zweiten digitalen Karte, die nur teilweise in der zu aktualisierenden Element-Teilmenge enthalten sind. Dies ermöglicht eine vereinfachte Auswahl möglicher zusätzlicher Element-Teilmengen durch "hineinragende" Elemente. In einer vorteilhaften Weiterbildung ist vorgesehen, zentralenseitig Abhängigkeiten zwischen Elementen der zweiten digitalen Karte abzuspeichern, wobei die zusätzliche Element-Teilmenge auch solche Elemente der zweiten digitalen Karte umfasst, von denen die nur teilweise in der zu aktualisierenden Element-Teilmenge enthalten Elemente abhängig sind und deren Daten aktueller als die Daten der Elemente der digitalen Karte im nutzerseitigen Endgerät sind.

Besonders vorteilhaft ist es, wenn zentralenseitig Informationen über Partitionen, also eine spezielle geographische Gebietszerlegung der digitalen Karte im nutzerseitigen Endgerät, speicherbar sind und ein zu aktualisierendes geographisches Gebiet über einen entsprechenden Partitionsverweis identifizierbar ist. Damit muss beispielsweise bei komplexen polygonalen Gebietsumrandungen nicht das gesamte Polygon in der Aktualisierungsanfrage des nutzerseitigen Endgerätes an die Zentrale mit übertragen werden.

Mit Vorteil wird vorgeschlagen, logisch zusammengehörige Aktualisierungen von Elementen der digitalen Karte zusammengefasst zu senden, beispielsweise auch in dem Fall, dass eine Aktualisierung eines einzelnen Elementes gemacht werden könnten, ohne dass eine Inkonsistenz in der digitalen Karte entstehen würde. Beispielsweise wird beim Verschieben einer Autobahnausfahrt um 500 m durch das Löschen der alten Ausfahrt die Konsistenz der digitalen Karte genauso erhalten wie durch das Einfügen der neuen Ausfahrt. Wenn jedoch diese beiden Aktualisierungen einzelner Elemente nicht zusammengefasst gesendet werden kann es sein, dass bei der Aktualisierung von Elementen nur eines Teilgebietes der Autobahn entweder nur die alte Ausfahrt gelöscht wird, und damit gar keine Ausfahrt mehr in der digitalen Karte vorgesehen ist, oder nur die neue Ausfahrt eingefügt wird, und somit eine Ausfahrt doppelt auf der digitalen Karte auftaucht.

Vorzugsweise ist für den Fall, dass die digitale Karte im nutzerseitigen Endgerät nur einen Teilbereich der in der Zentrale angeordneten zweiten digitalen Karte aufweist, eine Inkonsistenz der digitalen Karte an solchen Stellen zulässig, an denen eine Grenze zwischen einem Teilbereich, der von der digitalen Karte im nutzerseitigen Endgerät umfasst ist, und einem nicht umfassten Teilbereich verläuft. Besonders bei einer Neuerfassung von geographischen Gebieten ist so sichergestellt, dass nicht das komplette, zusätzlich erfasste geographische Gebiet - durch das die zentralenseitige zweite digitale Karte auf den neuesten Stand gebracht wird - als Aktualisierung der digitalen Karte verfügbar gemacht werden muss.

Anhand einer Zeichnung werden, ausgehend vom Stand der Technik mitsamt der auftretenden Probleme, verschiedene Ausführungsformen der Erfindung näher erläutert. Dabei zeigen:
- Fig. 1: schematisch eine beispielhafte Verwendung von Versionen und Partitionen der zentralenseitigen zweiten digitalen Karte,
- Fig. 2: schematisch eine beispielhafte Verwendung von Partitionen der digitalen Karte in der nutzerseitigen Vorrichtung zusammen mit Partitionen der zentralenseitigen zweiten digitalen Karte,
- Fig. 3: schematisch die Sicherstellung der Konsistenz durch Vermeidung von Sackgassen,
- Fig. 4: schematisch die Sicherstellung der Konsistenz bei Bereinigungen von Element-Ungenauigkeiten,
- Fig. 5: beispielhaft eine erste, erlaubte Inkonsistenz,
- Fig. 6: beispielhaft eine zweite, erlaubte Inkonsistenz,
- Fig. 7: beispielhaft eine dritte, erlaubte Inkonsistenz,
- Fig. 8: beispielhaft Abhängigkeiten von AktualisierungsTransaktionen.

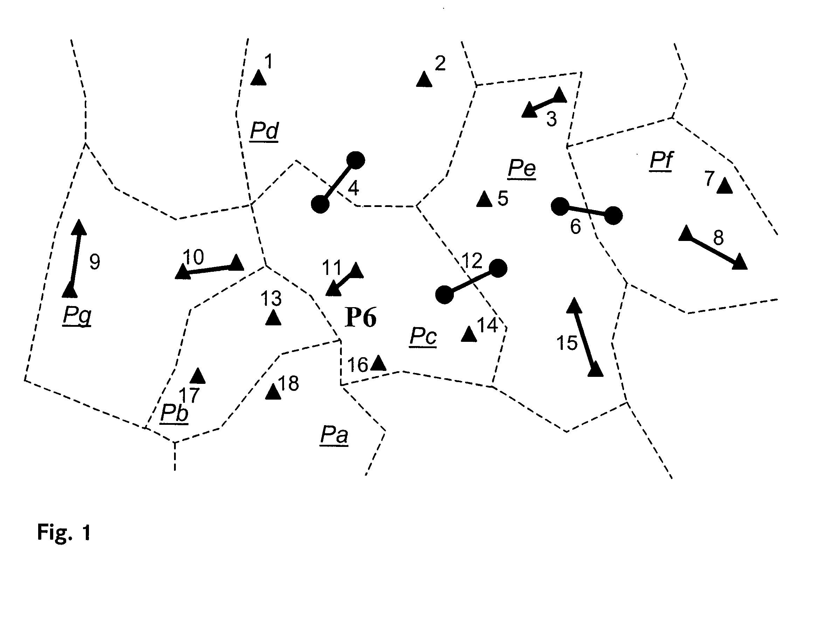

Die beispielhafte Verwendung von Partitionen und Versionen einer digitalen Karte wird schematisch anhand von Fig. 1 dargelegt. Partitionen - als eine spezielle geographische Gebietszerlegung der digitalen Karte - und Versionen - also Datenstände von Elementen der digitalen Karte zu einem bestimmten Zeitpunkt - sind Grundlage der erfindungsgemäßen Aktualisierung. Moderne digitale Karten werden auf verschiedene Weise in geographische Gebiete zerlegt. Die Kartenhersteller liefern ihre digitalen Karten meist in Zerlegungen, die mit administrativen Unterteilungen (z.B. Landesgrenzen) zusammenhängen. Die digitale Karte im nutzerseitigen Endgerät wird häufig in einer Weise (z.B. als 'Kacheln' entsprechend der Speichergröße) zerlegt, die eine einfache Verarbeitung der von der digitalen Karte umfassten Elemente auch von Rechensystemen mit eingeschränkter Rechenleistung und begrenzten Verarbeitungsmitteln, wie von einem Fahrzeugnavigationsgerät, erlaubt.

Zur Durchführung der Aktualisierung wird die digitale Karte in Partitionen als spezielle geographische Gebiete zerlegt. Eine Aktualisierungs-Transaktion ist eine Aktualisierung einer Menge von Elementen genau einer Partition der digitalen Karte. Jede Partition hat eine Version, als eine Anzahl von Aktualisierungs-Transaktionen für diese Partition. Eine 'spätere' Version beinhaltet zumindest sämtliche Aktualisierungs-Transaktionen 'früherer' Versionen und gegebenenfalls eine Aktualisierung weiterer Elemente. Dabei werden stets komplette Partitionen aktualisiert, eine Aktualisierung nur einzelner Elemente einer Partition ist heutzutage wegen des administrativen Aufwandes bei der Verwaltung von einzelnen Elementen einer digitalen Karte nicht vorgesehen. Zur Aktualisierung einer Partition werden der digitalen Karte unter Verwendung einer zentralenseitigen, zweiten digitalen Karte alle Aktualisierungs-Transaktionen, die eine spätere Version als die Version der digitalen Karte im nutzerseitigen Endgerät haben, bis zur in der Zentrale vorhandenen neuesten Version bereitgestellt. Um eine beliebige Element-Teilmenge der digitalen Karte im nutzerseitigen Endgerät zu aktualisieren, wird automatisch geprüft, welche Partitionen eine Überdeckung mit der zu aktualisierenden Element-Teilmenge aufweisen. Alle diese Partitionen werden dann aktualisiert.

Fig.1 zeigt schematisch eine beispielhafte Verwendung von Partitionen Pa, Pb, Pc, Pd, Pe, Pf Pg der zentralenseitigen zweiten digitalen Karte mit auf den neuesten Stand gebrachten Elementen 1, 2, 3, 4, 5, 6, 7, 8, 9, 10, 11, 12, 13, 14, 15, 16, 17, 18. Die Partitionen richten sich dabei nach administrativen Unterteilungen wie z.B. Landes- und Kreisgrenzen, und bilden zu aktualisierende Element-Teilmengen einer digitalen Karte. Die digitale Karte ist hier als Straßenkarte ausgebildet, wobei als Nutzanwendung bspw. eine Routenplanung für ein Fahrzeug-Navigationsgerät vorgesehen ist. Dabei werden durch eine jeweilige Aktualisierung der Straßenkarte im Fahrzeug-Navigationsgerät neue Elemente verfügbar gemacht, und zwar beispielsweise bei der Aktualisierung von Partition Pb die Elemente 17 und 3. Dabei kann 'verfügbar gemacht' bedeuten, dass diese Elemente neu zur Straßenkarte hinzukommen, oder dass lediglich bestehende Elemente aktualisiert werden, wobei die Elemente dem Fahrzeug-Navigationsgerät unter Verwendung der in der Zentrale angeordneten zweiten Straßenkarte verfügbar gemacht werden, und wobei die zweite Straßenkarte ständig auf dem neuesten Stand gehalten wird.

Die auf den neuesten Stand gebrachten Elemente 1, 2, 3, 4, 5, 6, 7, 8, 9, 10, 11, 12, 13, 14, 15, 16, 17, 18 beziehen sich entweder auf punktuelle Elemente (Dreiecke ohne Verbindungslinie) wie z.B. POI ('point of interest', interessierende Ortspositionen wie z.B. Restaurants), oder auf Strecken-Elemente (Dreiecke bzw. Kreise mit Verbindungslinie). Aktualisierte Stecken-Elementen befinden sich entweder komplett innerhalb einer Partition (Dreiecke mit Verbindungslinie) oder sind nur teilweise in einer Partition enthalten und 'ragen' in eine benachbarte Partition hinein (Kreise mit Verbindungslinie). Dann kann zwar, wenn diese Element-Änderung in mehrere Anteile aufgespalten werden - wobei jeder Anteil die Element-Änderung in genau einer Partition beschreibt - eine einheitliche Nummerierung der Versionen einer Partition gewährleistet werden. Allerdings ist nach der Aktualisierung einzelner Partitionen, welche nicht alle Anteile einer Element-Änderung umfassen, die Konsistenz der Straßenkarte nicht gewährleistet. Zwar kann, wenn die zweite Straßenkarte auf den neuesten Stand gebrachten wird, mit einer solchen Element-Änderung in einer Partition ein Verweis auf weitere Partitionen, die einen Anteil dieser Element-Änderungen umfassen, bereitgestellt werden, womit eine entsprechende Aktualisierung weiterer Partitionen automatisiert bewirkt werden kann. Dies führt jedoch im Regelfall zur Aktualisierung einer Vielzahl weiterer Partitionen, im Extremfall der gesamten Straßenkarte.

Wenn beispielsweise Partition Pc aus Fig.1 aktualisiert wird, würde für ein zu aktualisierendes Element 4 ein Verweis auf weitere Aktualisierungen in Partition Pd und für ein zu aktualisierendes Element 12 ein Verweis auf weitere Aktualisierungen in Partition Pe bereitgestellt werden. Bei der daraufhin veranlassten Aktualisierung von Partition Pe würde wiederum ein Verweis auf Aktualisierungen in Partition Pf bereitgestellt werden. Statt der eigentlich nur gewünschten Aktualisierung von Partition Pc würden also zur Wahrung der Konsistenz der Straßenkarte die Partitionen Pc, Pd, Pe und Pf aktualisiert.

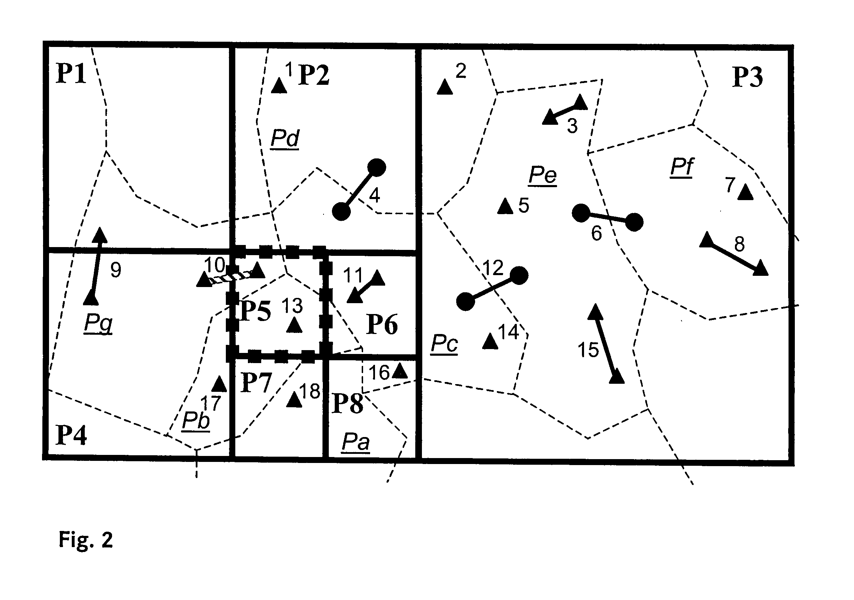

Die Straßenkarte im nutzerseitigen Endgerät ist meist in einer Weise zerlegt, die effiziente rechentechnische Zugriffe und Verarbeitung der Elemente ermöglicht. Hierzu wird üblicherweise eine Zerlegung in 'rechteckige' Partitionen, z.B. als 'Kacheln' entsprechend der Speichergröße, verwendet, als Teil der Nutzanwendung (PSF, 'physical storage format'). In Fig. 2 ist schematisch eine solche beispielhafte Verwendung von Partitionen der Straßenkarte im nutzerseitigen Endgerät bei der Element-Teilmenge aus Fig.1 gezeigt.

In jedem Fall wird die PSF-orientierte Partitionierung der Straßenkarte im nutzerseitigen Endgerät sich von der administrativ-orientierten Partitionierung der zweiten Straßenkarte in der Zentrale unterscheiden. Dabei ist es effizienter, Aktualisierungen der Straßenkarte im nutzerseitigen Endgerät für die PSF-orientierten Partitionen vorzunehmen und nicht für die administrativ-orientierten Partitionen. Somit müssen Teilmengen der Straßenkarte im nutzerseitigen Endgerät aktualisierbar sein, die nicht einer administrativ-orientierten Partition entsprechen.

Wenn somit beispielsweise eine PSF-orientierte Partition vorgegeben ist, als Teilmenge der Straßenkarte im nutzerseitigen Endgerät zur Aktualisierung durch die zentralenseitige Aussendung von Daten, kann diese PSF-orientierte Partition teilweise oder gänzlich von mehreren der administrativ-orientierten Partitionen der zweiten Straßenkarte in der Zentrale abgedeckt werden. Fig. 2 zeigt schematisch eine beispielhafte Verwendung von PSF-orientierten Partitionen P1, P2, P3, P4, P5, P6, P7, P8 der Straßenkarte im nutzerseitigen Endgerät zusammen mit administrativ-orientierten Partitionen Pa, Pb, Pc, Pd, Pe, Pf, Pg der zentralenseitigen zweiten Straßenkarte bei den Element-Teilmengen aus Fig.1. Die strichliert eingerahmte Partition P5 deckt teilweise die Partitionen Pb, Pc and Pg ab. Während jede dieser (zentralenseitigen) Partitionen Pb, Pc und Pg in der zweiten Straßenkarte eine andere Version haben kann, weist die (im nutzerseitigen Endgerät) zu aktualisierende Partition P5 der Straßenkarte eine einheitliche Versionsnummer auf. Wiederum ergibt sich hier das bereits dargelegte Problem, dass die Aktualisierung eines Elementes mehrere Partitionen betreffen kann - siehe die strichlierte Linie in Fig. 2 - und somit Inkonsistenzen in der aktualisierten Straßenkarte im nutzerseitigen Endgerät auftreten können. Möglich ist hier die automatische Selektion einer geeigneten, zusätzlichen Element-Teilmenge in der zweiten digitalen Karte. Somit ist zentralenseitig zu ermitteln, ob ein Anteil einer Element-Änderung eine 'benachbarte' (d.h. weitere) Partition betrifft. In dem in Fig. 2 dargelegten Fall ergäbe eine derartige Ermittlung (beispielsweise unter Verwendung der Geo-Koordinaten des strichliert eingezeichneten Elementes) dass zusätzlich die Partition P4 betroffen wäre. Eine derartige Ermittlung ist jedoch nicht erforderlich, wenn eine Element-Änderung die auch eine benachbarte Partition betrifft nicht zu einer Inkonsistenz in der Straßenkarte in der nutzerseitigen Vorrichtung führt. Ein Beispiel für eine derartige Element-Änderung ist die Änderung der Spuranzahl einer in eine benachbarte Partition 'hineinragenden' Strecke von einer auf zwei Spuren.

Ähnlich wie bei der administrativ-orientierten Partitionierung ergibt sich auch hier das Problem, dass bei der Aktualisierung benachbarter Partitionen weitere Abhängigkeiten gefunden werden können. Wegen der Element-Änderung 9, die über die Grenze von Partition P4 und Partition P1 verläuft, müsste bei der Aktualisierung von P4 auch noch Partition P1 berücksichtigt werden. Je kleiner dabei die Partitionen sind, umso geringer ist die Wahrscheinlichkeit einer weiteren Abhängigkeit. Bei flexibler PSF-orientierter Partitionierung, die eine nachträgliche Aufteilung einer Partition in kleinere Einheiten ermöglicht, ist die Größe einer zu aktualisierenden Nachbarpartitionen verringerbar.

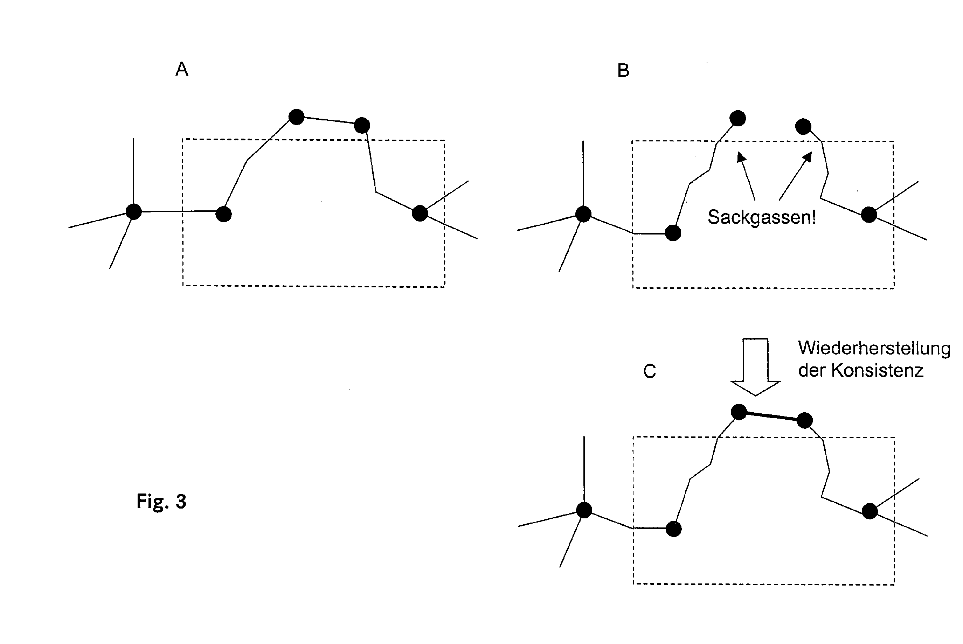

Fig. 3 zeigt schematisch die Sicherstellung der Konsistenz durch Vermeidung von Sackgassen. Dargestellt ist unter A eine Teilmenge von Elementen, in Form von Kanten und Knoten, die der (zentralenseitigen) zweiten digitalen Karte neu hinzugefügt wurde. Von einem nutzerseitigen Endgerät wird eine Aktualisierung einer Element-Teilmenge der digitalen Karte empfangen, entsprechend dem strichlierten Bereich. Würden nun ausschließlich solche Elemente der zweiten digitalen Karte der digitalen Karte des nutzerseitigen Endgerätes verfügbar gemacht, die zumindest teilweise von der zu aktualisierenden Element-Teilmenge umfasst sind, ergäben sich die unter B dargestellten Sackgassen. Deshalb wird zur Wiederherstellung der Konsistenz der digitalen Karte ein einzelnes Element, wie unter C visualisiert, als Teil einer zusätzlichen Element-Teilmenge automatisch selektiert und der digitalen Karte des nutzerseitigen Endgerätes ebenfalls verfügbar gemacht. Dieses einzelne Element stellt sicher, dass keine Strecken in der in einer Teilmenge aktualisierten digitalen Karte existieren, an deren Enden Benutzer zwangsläufig umkehren müssen, wenn diese Strecken nicht auch von der zweiten digitalen Karte so umfasst sind.

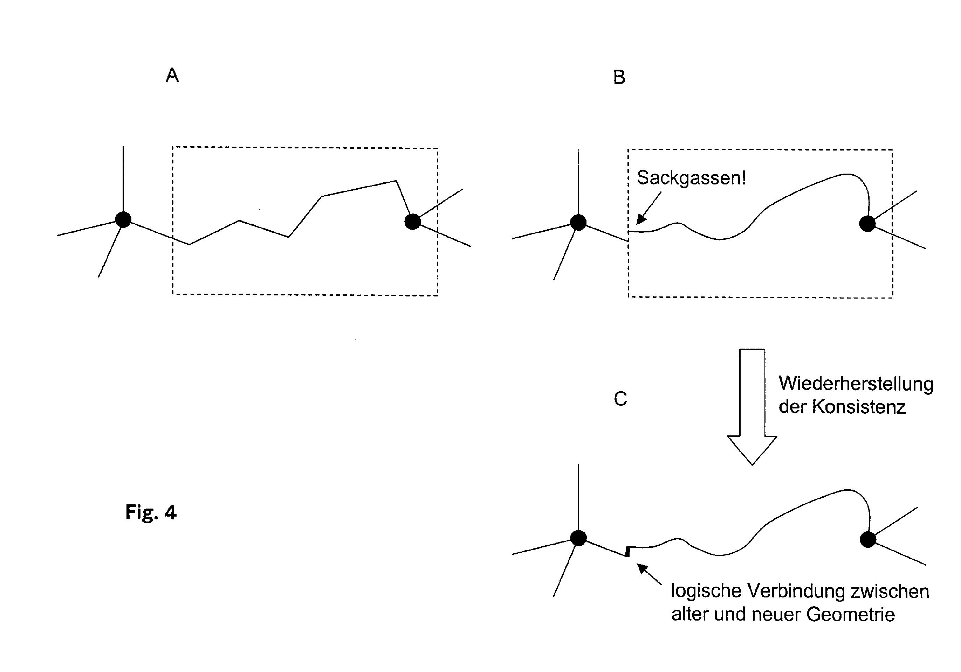

Fig. 4 zeigt schematisch die Sicherstellung der Konsistenz bei Bereinigungen von Element-Ungenauigkeiten. Dargestellt ist unter A eine Teilmenge von Elementen, in Form von Kanten und Knoten, die in der (zentralenseitigen) zweiten digitalen Karte durch eine erneute Vermessung um Ungenauigkeiten bereinigt wurde. Von einem nutzerseitigen Endgerät wird eine Aktualisierung einer Element-Teilmenge der digitalen Karte empfangen, entsprechend dem strichlierten Bereich. Würden nun diejenigen Elemente der zweiten digitalen Karte der digitalen Karte des nutzerseitigen Endgerätes verfügbar gemacht, die eine aktuellere Version als die Version der digitalen Karte aufweisen - nämlich die um Ungenauigkeiten bereinigten, unter B innerhalb des strichlierten, d.h. zu aktualisierenden Bereiches angeordneten - so ergäbe sich die unter B dargestellte Sackgasse. Deshalb wird zur Wiederherstellung der Konsistenz der digitalen Karte ein einzelnes Element, wie unter C visualisiert, als Teil einer zusätzlichen Element-Teilmenge automatisch selektiert und der digitalen Karte dem nutzerseitigen Endgerät ebenfalls verfügbar gemacht. Dieses einzelne Element stellt eine logische Verbindung zwischen Elementen der aktualisierten und der nicht aktualisierten Teilmenge der digitalen Karte her.

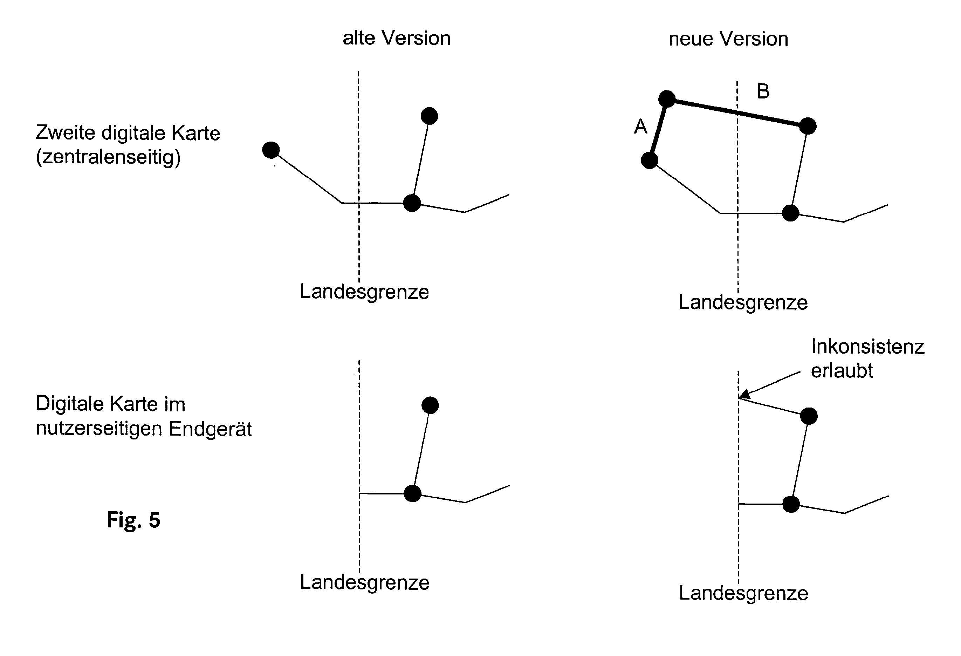

Die Fig. 5, 6, 7 zeigen jeweils beispielhaft verschiedene erlaubte Inkonsistenzen. Falls die digitale Karte im nutzerseitigen Endgerät nur einen Teilbereich der in der Zentrale angeordneten zweiten digitalen Karte aufweist, ist eine Inkonsistenz der digitalen Karte an solchen Stellen zulässig, an denen eine Grenze zwischen einem Teilbereich, der von der digitalen Karte im nutzerseitigen Endgerät umfasst ist, und einem nicht umfassten Teilbereich verläuft.

Anhand Fig. 5 wird das für eine in der zweiten digitalen Karte neu hinzugekommene und in Fig. 5 fett eingezeichnete Kantenfolge A, B dargelegt, die über eine Landesgrenze hinweg verläuft. Hier ist in der digitalen Karte im nutzerseitigen Endgerät eine Inkonsistenz erlaubt, da der Teilbereich der zweiten digitalen Karte, der außerhalb der Landesgrenze liegt, von der digitalen Karte im nutzerseitigen Endgerät nicht umfasst ist.

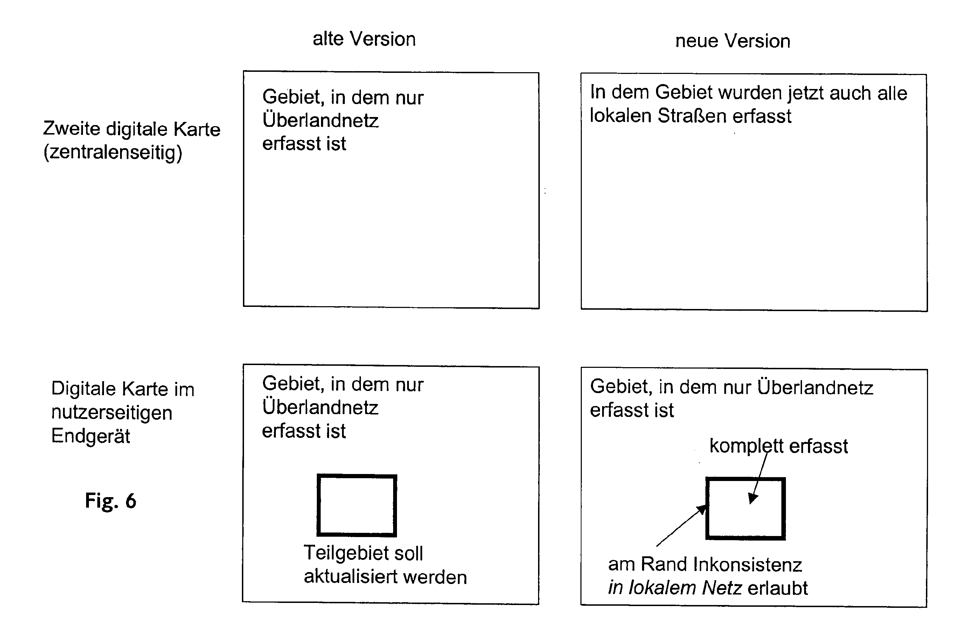

In Fig. 6 wird eine für einen Teilbereich von Straßenklassen erlaubte Inkonsistenz visualisiert. In der alten Version der digitalen Karte und der zweiten digitalen Karte, die vom nutzerseitigen Endgerät bzw. zentralenseitig verwendet wird, ist im gezeigten Gebiet nur das Überland-Straßennetz erfasst. In der neuen Version des Gebietes sind nun ebenfalls lokale Straßen erfasst. Es wird nun von dem nutzerseitigen Endgerät die Aktualisierung eines in Fig. 6 fett eingezeichneten Teilgebietes als Teilmenge der zweiten digitalen Karte empfangen. Hier ist in der digitalen Karte im nutzerseitigen Endgerät eine Inkonsistenz am Rand des zu aktualisierenden Teilgebietes erlaubt, da der Teilbereich von Straßenklassen der zweiten digitalen Karte, der außerhalb der zu aktualisierenden Teilmenge liegt, von der digitalen Karte im nutzerseitigen Endgerät nicht umfasst ist.

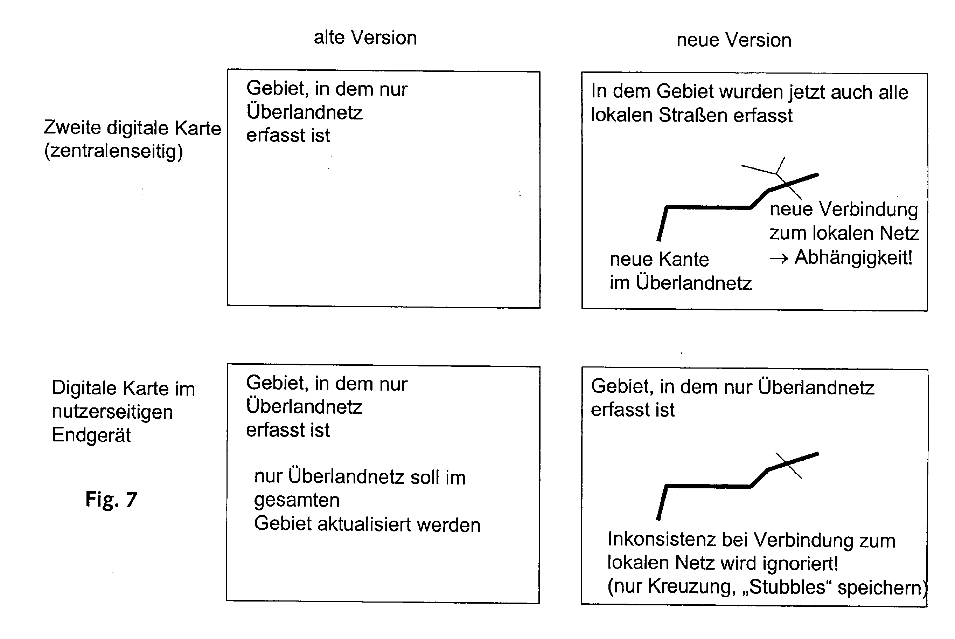

Eine weitere erlaubte Inkonsistenz ist in Fig. 7 gezeigt. Es wird wiederum ein Teilbereich von Straßenklassen betrachtet. In der alten Version der digitalen Karte und der zweiten digitalen Karte, die vom nutzerseitigen Endgerät bzw. zentralenseitig verwendet wird, ist im gezeigten Gebiet nur das Überland-Straßennetz erfasst. In der neuen Version des Gebietes sind nun ebenfalls lokale Straßen erfasst und zusätzlich eine neue Straße im Überland-Straßennetz hinzugefügt. Es wird nun vom nutzerseitigen Endgerät die Aktualisierung des Überland-Straßennetzes im gesamten Gebiet als Teilmenge der zweiten digitalen Karte empfangen. Hier wird in der digitalen Karte im nutzerseitigen Endgerät eine Inkonsistenz bei Verbindungen zu lokalen Straßen ignoriert, da solche in der digitalen Karte im nutzerseitigen Endgerät nur in Form von Streckenstummeln ('stubbles') abgelegt sind.

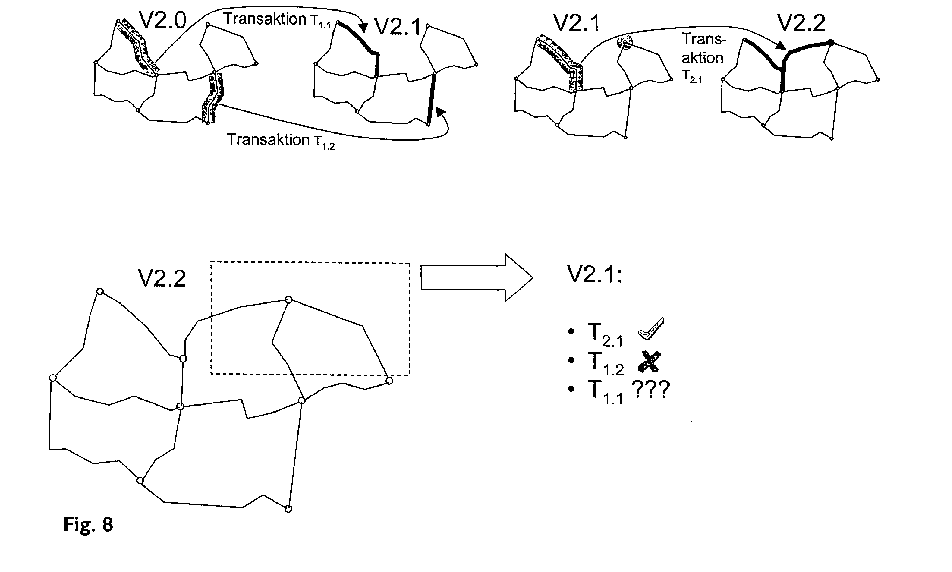

Fig. 8 stellt beispielhaft Abhängigkeiten von Aktualisierungs-Transaktionen dar. Die zweite digitale Karte in der Zentrale, Version V2.0, wird zuerst durch Aktualisierungs-Transaktionen T_{1,1} und T_{1,2} auf eine neuere Version V2.1 gebracht. Anschließend wird die Version V2.1 durch eine Aktualisierungs-Transaktion T_{2,1} auf die Version V2.2 gebracht. Dabei werden jeweils die grau hinterlegten Elemente in die schwarz hinterlegten Elemente überführt. Im unteren Teil der Fig. 8 ist ein strichliertes Gebiet gezeigt, entsprechend einer von einem nutzerseitigen Endgerät empfangenen, zu aktualisierenden Element-Teilmenge. Die digitale Karte des nutzerseitigen Endgerätes hat im strichlierten Gebiet Version V2.1. Damit die digitale Karte des nutzerseitigen Endgerätes nach der Aktualisierung der zu aktualisierenden Element-Teilmenge Konsistenz aufweist, ist die Aktualisierungs-Transaktion T_{2,1}, nicht aber die Aktualisierungs-Transaktion T_{1,2} als zusätzliche Element-Teilmenge zur Aktualisierung der digitalen Karte zu übertragen. Die Aktualisierungs-Transaktion T_{1,1} ist nur in dem Fall zur Aktualisierung der digitalen Karte zu übertragen, wenn die Version der digitalen Karte des nutzerseitigen Endgerätes außerhalb der zu aktualisierenden Element-Teilmenge älter ist als Version V2.1.

## Patentansprüche

1. Verfahren zur Aktualisierung einer digitalen Karte, umfassend Elemente eines Verkehrswegenetzes, in einem nutzerseitigen Endgerät, auf dem wenigstens eine Nutzanwendung der digitalen Karte abläuft, unter Verwendung einer in einer Zentrale angeordneten zweiten digitalen Karte,
**dadurch gekennzeichnet,**
**dass** wenigstens eine Element-Teilmenge der digitalen Karte vorgebbar ist, zur Aktualisierung durch eine zentralenseitige Aussendung von Daten, wobei von der Zentrale zusätzlich zu einer zu aktualisierenden Element-Teilmenge eine zusätzliche Element-Teilmenge in der zweiten digitalen Karte automatisch derart selektiert wird, dass die digitale Karte nach der Aktualisierung in sich Konsistenz aufweist, wobei Daten zur Aktualisierung der oder jeder zu aktualisierenden Element-Teilmenge und Daten der oder jeder zusätzlichen Element-Teilmenge zentralenseitig ausgesendet werden und beim Empfang solcher Daten vom nutzerseitigen Endgerät geprüft wird, ob die empfangenen Daten eine vorgegebene Element-Teilmenge betreffen, in welchem Fall die empfangenen Daten der digitalen Karte verfügbar gemacht werden.

2. Verfahren nach Anspruch 1,
**dadurch gekennzeichnet,**
**dass** die Daten zentralenseitig über einen Broadcast-Kanal ausgesendet werden.

3. Verfahren nach Anspruch 1 oder 2,
**dadurch gekennzeichnet,**
**dass** die wenigstens eine Element-Teilmenge der digitalen Karte vom Nutzer vorgebbar und / oder änderbar ist.

4. Verfahren nach einem der Ansprüche 1 bis 3,
**dadurch gekennzeichnet,**
**dass** zentralenseitig Daten betreffend verschiedene Versionen einer zu aktualisierenden Element-Teilmenge der digitalen Karte ausgesendet werden.

5. Verfahren nach Anspruch 4,
**dadurch gekennzeichnet,**
**dass** die Aussendung zyklisch erfolgt.

6. Verfahren nach einem der Ansprüche 1 bis 5,
**dadurch gekennzeichnet,**
**dass** eine zu aktualisierende Element-Teilmenge ein geographisches Gebiet und/ oder wenigstens eine Strecke als Folge von Kanten und/ oder wenigstens eine Klasse von Strecken und/ oder einen oder mehrere point of interest (POI) und/ oder Klassen von POIs umfasst.

7. Verfahren nach Anspruch 6,
**dadurch gekennzeichnet,**
**dass** die Konsistenz bezüglich der oder jeder auf dem nutzerseitigen Endgerät ablaufenden Nutzanwendung sichergestellt wird durch automatische Selektion der zusätzlichen Element-Teilmenge derart, dass nach der Verfügbarmachung der Daten zur Aktualisierung der zusätzlichen Element-Teilmenge in der digitalen Karte des nutzerseitigen Endgerätes keine Strecke existiert, an deren Ende Verkehrswegenetz-Benutzer zwangsläufig umkehren müssen, wenn diese Strecke nicht auch von der zweiten digitalen Karte umfasst ist, und / oder keine zwei Strecken existieren, an deren Enden Verkehrswegenetz-Benutzer zwangsläufig umkehren müssen, wenn diese zwei Strecken in der zweiten digitalen Karte durch wenige Kanten verbunden sind, und / oder keine Strecken existieren, an denen zerteilte Abbiegerestriktionen vorliegen, die in der zweiten digitalen Karte als Folge von Strecken umfasst sind, und / oder für das Erreichen eines POI relevante Daten einer Strecke so aktuell sind wie die Daten des POIs selbst, und/ oder Element-Abhängigkeiten komplett übertragen werden.

8. Verfahren nach Anspruch 6 oder 7,
**dadurch gekennzeichnet,**
**dass**, wenn eine zu aktualisierende Element-Teilmenge ein geographisches Gebiet umfasst, die Daten zentralenseitig über einen Broadcast-Kanal, der vorzugsweise in diesem geographischen Gebiet empfangbar ist, ausgesendet werden.

9. Verfahren nach einem der Ansprüche 1 bis 8,
**dadurch gekennzeichnet,**
**dass** Bereinigungen von Element-Ungenauigkeiten in der zweiten digitalen Karte speziell **gekennzeichnet** werden, wobei zusammen mit einer zusätzlichen Element-Teilmenge zentralenseitig weitere Daten ausgesendet werden, welche zur Wiederherstellung einer logischen Verbindung zwischen durch eine Aktualisierung um Ungenauigkeiten bereinigten und nicht bereinigten Elementen verwendbar sind.

10. Verfahren nach einem der Ansprüche 1 bis 9,
**dadurch gekennzeichnet,**
**dass** die Daten zur Aktualisierung der zu aktualisierenden Element-Teilmenge auch solche Elemente der zweiten digitalen Karte umfassen, welche nur teilweise in der zu aktualisierenden Element-Teilmenge enthalten sind.

11. Verfahren nach einem der Ansprüche 6 bis 10,
**dadurch gekennzeichnet,**
**dass** zentralenseitig Information über Partitionen, die eine geographische Gebietszerlegung der digitalen Karte im nutzerseitigen Endgerät darstellen, speicherbar sind und ein zu aktualisierendes geographisches Gebiet über einen entsprechenden Partitionsverweis identifizierbar ist.

12. Verfahren nach einem der Ansprüche 1 bis 11,
**dadurch gekennzeichnet,**
**dass** logisch zusammengehörige Aktualisierungen von Elementen zusammengefasst gesendet werden.

13. Verfahren nach einem der Ansprüche 1 bis 12,
**dadurch gekennzeichnet,**
**dass**, falls die digitale Karte im nutzerseitigen Endgerät nur einen Teilbereich der in der Zentrale angeordneten zweiten digitalen Karte aufweist, eine Inkonsistenz der digitalen Karte an solchen Stellen zulässig ist, an denen im nutzerseitigen Endgerät eine Grenze zwischen einem Teilbereich, der von der digitalen Karte umfasst ist, und einem nicht umfassten Teilbereich verläuft.

14. Vorrichtung zur Ausführung des Verfahrens nach einem der Ansprüche 1 bis 13 mit einem nutzerseitigen Endgerät umfassend Speichermittel für eine digitale Karte sowie einer Zentrale umfassend Zentralen-Speichermittel für eine zweite digitale Karte, wobei nutzerseitiges Endgerät und Zentrale jeweils ein Rechenmittel, die Zentrale ein Broadcast-Sendemittel und das nutzerseitige Endgerät ein Broadcast-Empfangsmittel aufweisen.
